# EUROPEAN PATENT SPECIFICATION

(11) **EP 3 094 535 B1**
(45) Date of publication and mention of the grant of the patent: **19.08.2020**
(21) Application number: 14708961.9
(22) Date of filing: 14.02.2014
(51) Int. Cl.: B61D 33/00, B60N 2/18, B60N 2/24

(54) **THE METHOD OF FIXING OF THE SITTING POSITION BY A PASSENGER IN A SEAT ASSEMBLY, ESPECIALLY IN MASS TRANSPORT**
VERFAHREN ZUR FIXIERUNG DER SITZPOSITION DURCH EINEN INSASSEN IN EINER SITZANORDNUNG INSBESONDERE BEI EINEM MASSENTRANSPORT
PROCÉDÉ DE FIXATION DE LA POSITION D'ASSISE PAR UN PASSAGER DANS UN ENSEMBLE DE SIÈGE, SPÉCIALEMENT DANS UN TRANSPORT COLLECTIF

(30) Priority: 13.01.2014 PL 40683014
(43) Date of publication of application: 23.11.2016
(73) Proprietor: Specjalistyczny Zaklad Tapicerstwa Komunikacyjnego, 94 -247 Lodz (PL)
(72) Inventor: KOWALSKI, Maciej, 99 - 420 Lyszkowice (PL)
(74) Representative: Dziubinska, Joanna
(86) International application number: PCT/PL2014/000012
(87) International publication number: WO 2015/105429

(56) References cited:
- DE-A1- 2 460 192
- FR-A2- 2 424 167
- JP-U- H01 143 948
- US-A- 3 861 743

## Description

The subject of the invention is the method of fixing of the sitting position by a passenger in a seat assembly, especially in mass transport, intended mainly for railway carriages. This method may also be used in other public utility places with limited space for sitting or relaxing.

Various construction solutions concerning mass transport seat assemblies, offering the possibility of changing of the position of the seat back and the seat base are known. In the known solutions there are used various kinds of mechanisms for changing of the position of the seat assembly: lever mechanisms, spring mechanisms or lever and ratchet mechanisms with a return spring.

In the known solutions the releasing of the lever of the blocking system allows to move the seat base and relocate the seat back. There is also known the method of changing of the position of the seat assembly by moving it forward, to the back of the seat base, used mainly in motor cars.

From the Polish patent application no. PL396602 there is known a method and a system of the changing of the position of a self-supporting seat assembly, where sliding elements with a fixed seat assembly are relocated along the tracks simultaneously with the change of the position of the seat assembly which is moved forward, and the area behind the seat assembly remains unchanged. In this solution the seat assembly has sliding elements and a system of co-working tracks of oblong shape, as well as a mechanism for fixing the setting in a selected position.

Japanese utility model no. JPH01143948U discloses method of fixing of the sitting position by a passenger by a supporting system in which relocation take place after the sliding elements. Relocation of the seat base is made by two pairs of tracks fixed by means of rocking levers under the seat base of the seat assembly. Tracks are fixed on an adequately shaped base, which allows to relocate the seat base and the seat back that are joined by an articulated joint. Seat base moves along tracks fixed on an adequately shaped base by means of articulated joints and fixed sliding elements.

The aim of the invention is to offer a simple method that allows to relocate, without any effort on the part of the passenger, a self-supporting profiled composite seat assembly having the form of a uniform solid with fixed optimum ergonomic parameters, intended mainly for mass transport.

The method of fixing the seating position by a passenger in a seat assembly, especially in mass transport, characterized by the fact that the change of the position of the uniform shape seat assembly, from the starting basic position, dependent on the weight and centre of gravity of the passenger, takes place by releasing of the blockade of the supporting system with a button - brake and relocating of the seat assembly from the starting basic position, by linear and rotating movement, where the gradient of the seat back in relation to the seat base remains unchanged without changing of the height of the edge of the seat base, to another position dependent on anthropometric features; in this method the linear horizontal relocation by at least 100 mm changes the position of the seat assembly by at least 8° angle, and the return of the seat assembly to the starting basic position takes place after the release of the button - brake of the supporting system and the active participation of the passenger. In the solution according to the invention, having released (by pressing) the blocking system placed under the seat base, the passenger with concrete anthropometric and anatomical features (weight and place of gravity centre) causes the change of the position of the seat assembly, with automatic determination of optimum position. The determination of optimum expected (required) position does not require any effort of the sitting person, as it is made under the person's weight.

In the solution according to the invention, the seat assembly has a form of a uniform solid, where the gradient of the seat back in relation to the seat base remains unchanged, regardless of the position of the seat assembly within the range of settings offered by its construction. In accordance with binding rules (Card UIC 566), the minimum 5° raising of the seat base above the level is retained. Using the solution according to the invention, at the full range of the change of the position of the seat assembly, the seat base may tilt by at least another 8°; the change within the same range refers also to the position of the seat back. As a result of an interreaction of the passenger's weight and a proper arrangement of sliding elements, the seat assembly moves along the tracks. It is a consequence of the operation of a matching system supporting the movement of the seat assembly and making use of its linear and rotating movement. In the solution according to the invention, due to the use of the system of tracks, changes of the position of the seat assembly are realized within the scope of angle changes offered by its construction, from the basic position to the optimum position, without the simultaneous change of the height of the anterior edge of the seat base and without "occupying" the area behind the seat assembly. The construction solutions of the seat assembly are accordant with the binding requirements specified in Card UIC 567.

In the solution according to the invention, the change of the position of the seat assembly may take place automatically under the weight of the passenger, after the brake blocking the previous position has been released. In the solution the button - brake and the system automatically fixing the position of the seat assembly are parts of the same device. Releasing the button - brake, apart from the inert submission to the position of the seat assembly - the cradle in which the passenger is sitting, the passenger may intuitively obtain any other position of the seat assembly allowed by its construction using his muscle strength and/or changing the position of his body. The technical functionality of the seat assembly is assured by self-adjustment of its setting in relaxation position, depending on individual anatomical features of the sitting person, i.e., the person's weight and gravity centre. It is achieved by the development of the spatial shape and hardness of upholstery system, the selection of the range of position changes of the seat assembly realized by the system of tracks and an element supporting the movement of the seat assembly during the change of its position.

The applied blocking system (e.g., in the form of a friction brake) assures non-gradual positioning of the seat assembly in the whole range of its movements. After the change from the starting basic position to the relaxation position, the seat assembly retains the height of the anterior edge of the seat base at the selected level, maintaining the fixed distance between upper edges of seat backs, i.e., maintaining fixed dimensions of the interior partitioning for seat assemblies positioned in rows or opposite each other. After the release of the brake of the blocking system the supporting system definitely facilitates the immediate return of the seat assembly to the starting basic position. The method according to the invention allows to adjust the sitting comfort to anatomical features of the passenger. The technical functionality of the method according to the invention of the seat assembly assures changeable setting of relaxation position depending on the sitting person.

The method according to the invention may be applied in seat assemblies to be used in places with a limited space for sitting, e.g., in cinemas, planetaria, or other public utility places, where sitting in a relaxation position is possible.

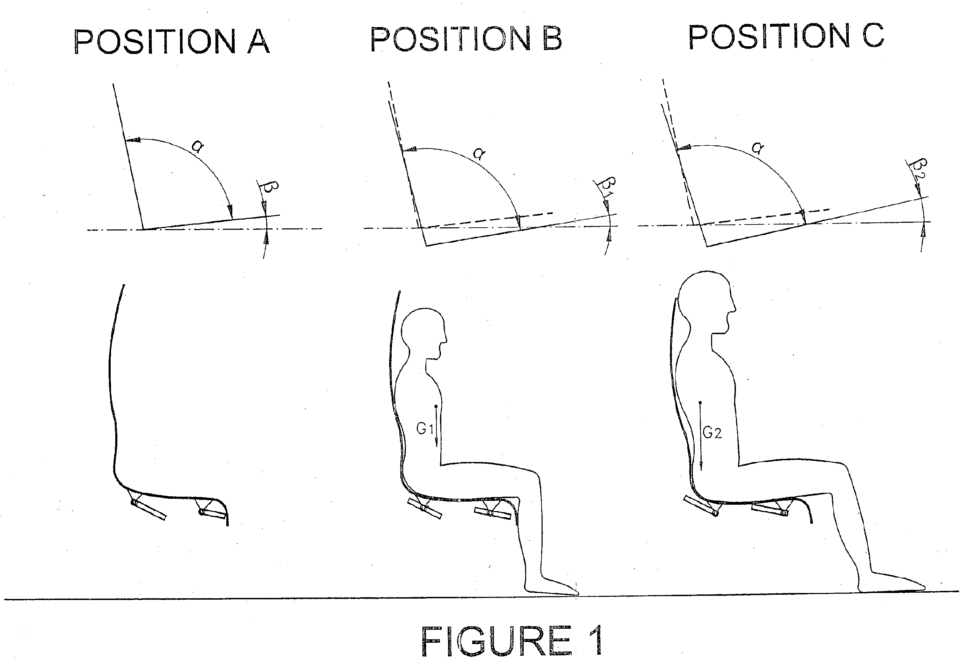

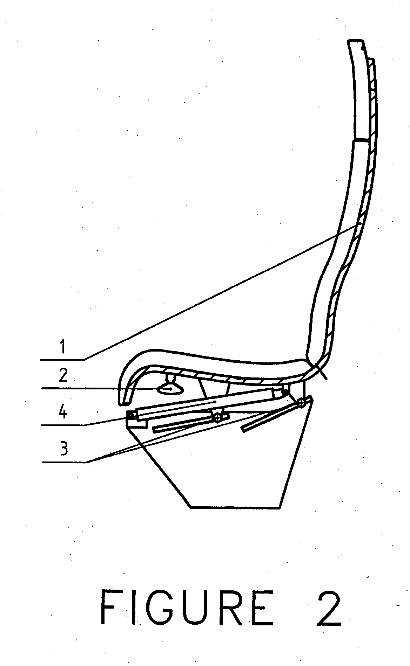

The method according to the invention has been presented in Fig. 1, where the method of moving of the seat assembly at different positions of a sitting person has been shown. Position A shows the position of the seat assembly without the sitting person; position B shows the position of the seat assembly with a person weighing G1 and assuming optimum position under his own weight; and position C shows the position of the seat assembly with a person weighing G2 and assuming relaxation position under his own weight; Fig. 2 presents a reference illustration of the seat assembly.

The solution according to the invention has been presented in embodiments not limiting its application.

### Example 1

The seat assembly in the form of an ergonomically uniform profiled solid (1) preferably with a matching flexible upholstery system is fixed in a railway carriage. Having released the button - brake lever (2), a sitting-down passenger takes an automatically fixed relaxation position, changing the position of the seat assembly by 8° angle under his weight and the location of the centre of gravity. The position of the passenger in the seat assembly results from the interreaction of the passenger's weight and sliding capacities of the seat assembly along the tracks (3), as well as the operation of the matching system supporting (4) the seat assembly movement.

### Example 2

In order to take another (relaxation) position the passenger releases the button - brake by pressing the blockade (2) placed at the edge of the seat assembly under the seat base. The seat assembly of the uniform shape goes up or down taking other relaxation position - intermediate positions within the planned scope of seat assembly movements.

### Example 3

The passenger who wants to return from relaxation position (after tilting by 10 angle) to standard position releases the blockade of the seat assembly with a button - brake (2) under the seat base, moves his body weight by slightly bending forward and slightly pushing off with his feet, and makes an intuitive movement, with the released brake lever. A free return to the sitting position takes place.

## Claims

1. method of fixing of a sitting position by a passenger in a seat assembly (1) Z especially in mass transport by a supporting system (4), a relocation of sliding elements, a change of the position of the seat assembly, with a movement forward without changing the area behind the seat assembly, and with a mechanism for fixing of the position, the seat assembly having a uniform shape and comprising a seat back and a seat base, **characterized by** the fact that the change of the position of the uniform shape seat assembly (1), from a starting basic position, dependent on the weight and centre of gravity of the passenger, takes place by releasing of a blockade of the supporting system (4) with a button-brake (2) and relocating of the seat assembly from the starting basic position, by linear and rotating movement, where the gradient of the seat back in relation to the seat base remains unchanged without changing of the height of the edge of the seat base, to another position dependent on anthropometric features; in this method the linear horizontal relocation by at least 100 mm changes the position of the seat assembly by at least 8° angle, and the return of the seat assembly (1) to the starting basic position takes place after the release of the button-brake (2) of the supporting system (4) and the active participation of the passenger.

## Patentansprüche

1. Die Art und Weise der Bestimmung der Sitzposition durch den Insassen auf dem Sitz insbesondere in den öffentlichen Verkehrsmitteln mithilfe der Servoeinrichtung, Verlagerung von Fahrelementen, Änderung der Lage des Sitzes durch Verlagerung nach vorne, wobei die Unverletzlichkeit des Bereichs hinter dem Sitz beibehalten wird, mit dem Mechanismus für die Bestimmung der Lage, wo der Sitz eine einheitliche Form hat und die Lehne und den Sitzunterbau enthält, charakteristisch dadurch, dass die Änderung der Lage des Sitzes (1) von einheitlicher Form von der Ausgangsposition, die von dem Gewicht und dem Schwerpunkt des Insassen abhängt, durch die Entsperrung der Servoeinrichtung (4) mittels Drucktaste (2) erfolgt und Verlagerung des Sitzes von der Ausgangsposition mittels Linear-Dreh-Bewegung, wobei die Neigung der Sitzlehne zum Sitzunterbau unverändert bleibt und die Höhe des Sitzrandes gegenüber der anderen von anthropometrischen Eigenschaften abhängigen Position unverändert beibehalten wird; bei dieser Art und Weise verursacht die lineare waagerechte Verlagerung um mindestens 100 mm eine Änderung der Lage des Sitzes um den Winkel von mindestens 8°, und der Rücklauf des Sitzes (1) zur Grundposition erfolgt nach dem Loslassen der Bremse (2) der Servoeinrichtung (4) und aktiver Beteiligung des Insassen.

## Revendications

1. La méthode de la fixation de la position assise par le passager dans le fauteuil avant tout dans la communication collective par le système d'assistance, déplacement des éléments en cours d'exécution, modification de la position de la chaise, avec le mouvement vers l'avant tout en maintenant l'intégrité de la zone à l'arrière de la chaise avec un mécanisme de positionnement, où la chaise possède une forme uniforme et comprend un dossier et une base d'assise, **caractérisé en ce que** le changement de position de la chaise (1) avec une forme uniforme de la position initiale, en fonction du poids et du centre de gravité du passager, se fait en relâchant le verrou de direction assistée (4) avec le bouton (2) et en déplaçant le siège de la position initiale, dans un mouvement linéaire et en rotation, où l'inclinaison du dossier du siège vers la base du siège reste inchangée tout en conservant la même hauteur du bord de siège pour une position différente en fonction des caractéristiques anthropométriques; dans le procédé, un décalage linéaire horizontal d'au moins 100 mm amène le siège à changer d'au moins un angle de 8°, tandis que le fauteuil (1) revient à sa position de base après avoir relâché le frein (2) de la direction assistée (4) et la participation active du passager
